# EUROPÄISCHE PATENTSCHRIFT

(11) **EP 0 843 498 B1**
(45) Veröffentlichungstag und Bekanntmachung des Hinweises auf die Patenterteilung: **22.09.2004**
(21) Anmeldenummer: 97118312.4
(22) Anmeldetag: 22.10.1997
(51) Int. Cl.: H04Q 11/04

(54) **Anruf-Signalisierungsvorrichtung zum Betreiben an einem ISDN-Anschluss**
Call signalling device for an ISDN-port
Dispositif de signalisation d'appel pour une connexion RNIS

(30) Priorität: 15.11.1996 DE 19647262
(43) Veröffentlichungstag der Anmeldung: 20.05.1998
(73) Patentinhaber: Deutsche Telekom AG, 53113 Bonn (DE)
(72) Erfinder: Hoffmann, Matthias, Dipl.-Ing. (FH), 06128 Halle (DE)
(74) Vertreter: Gleiss & Grosse

(56) Entgegenhaltungen:
- DE-A- 19 543 040
- DE-U- 8 706 937
- US-A- 5 073 922
- KLEIN D: "THE POWER SUPPLY OF SUPPLEMENTARY EQUIPMENT AT THE ISDN-TELEPHONESET" PROCEEDINGS OF THE 7TH INTERNATIONAL TELECOMMUNICATIONS ENERGY CONFERENCE (INTELEC '85), 14. - 17. Oktober 1985, Seiten 521-525, XP002108170

## Beschreibung

Die Erfindung betrifft eine Anruf-Signalisierungsvorrichtung zum Betreiben an einem ISDN-Anschluß mit einem Signalgeber, der einen eingehenden Anruf signalisiert.

In dem noch weitverbreiteten analogen Telefonnetz ist es möglich, einen sogenannten Zweitwecker an einer Telefon-Anschlußdose anzuschließen. Dieser Zweitwecker dient zur Signalisierung eines eingehenden Anrufs unabhängig von einem angeschlossenen Telefon. Solche Zweitwecker oder allgemein als Wekker und Tonrufgeräte bezeichneten Vorrichtungen besitzen einen einfachen Aufbau und werden entsprechend dem Netz analog betrieben.

In zunehmenden Maße findet jedoch das digitale ISDN-Netz Anwendung. Hierzu sind anwenderseitig digital arbeitende Endgeräte erforderlich, die das ISDN-Übertragungsprotokoll verarbeiten können. Ein Einsatz der bisher benutzten analogen Endgeräte ist nur dann möglich, wenn ein sogenannter Terminaladapter zwischen ISDN-Anschluß und Endgerät eingesetzt wird. Dieser Terminaladapter weist aufwendige Elektronik auf, die die empfangenen ISDN-Daten in analoge Daten umsetzt.

Ebenso wie beim analogen Netz besteht auch bei dem neuen ISDN-Netz der Wunsch, Tonrufgeräte zur vom Telefon unabhängigen Signalisierung eingehender Anrufe zu verwenden. Aus dem Stand der Technik (vgl. z.B. DE-U-87 06 937) ist eine Signalisierungsvorrichtung bekannt, die an ein ISDN-Endgerät, beispielsweise ein ISDN-Telefon, anzuschließen ist. Nachteilig dabei ist jedoch, daß eine weitere Verkabelung zwischen Telefon und Signalisierungsvorrichtung notwendig ist, die insbesondere den Einsatzort des Tonrufgeräts stark einschränkt.

Darüber hinaus läßt diese Lösung die Verwendung vorhandener analoger Tonrufgeräte nicht mehr zu, so daß die vom analogen auf das ISDN-Netz wechselnden Anwender die vorhandenen Tonrufgeräte ohne die Verwendung des erwähnten teuren Terminaladapters nicht weiternutzen können.

Die Aufgabe der vorliegenden Erfindung besteht deshalb darin, eine Anruf-Signalisierungvorrichtung vorzusehen, die einfach aufgebaut und kostengünstig ist und die einen Betrieb der analogen Tonrufgeräte ermöglicht.

Diese Aufgabe wird durch eine Anruf-Signalisierungsvorrichtung mit den Merkmalen des Anspruchs 1 gelöst. Dadurch, daß eine direkt an den ISDN-Anschluß anschließbare Auswerteeinrichtung vorgesehen ist, die lediglich die in den übertragenen ISDN-Daten vorhandenen Rufinformationen auswertet, ist ein im Gegensatz zum bekannten Terminaladapter einfacher schaltungstechnischer Aufbau realisierbar. Dadurch, daß eine Ansteuereinrichtung vorgesehen ist, die mit der Auswerteeinrichtung verbunden ist und den Signalgeber aktiviert, lassen sich die bekannten analog arbeitenden und kostengünstigen Signalgeber weiter einsetzen.

Einer der Vorteile ist also darin zu sehen, daß keine speziell für das ISDN-Netz ausgebildete Signalgeber benötigt werden, da auf die bekannten analogen Signalgeber zurückgegriffen werden kann. Des weiteren ist die erfindungsgemäße Anruf-Signalisierungsvorrichtung unabhängig von einem Telefon einfach zu installieren, wobei vorhandene Telefonanschlußdosen verwendbar sind. Damit wird auch ein Eingriff am Telefon zum Anschluß eines Signalgebers hinfällig.

In einer vorteilhaften Ausgestaltung der Erfindung weist die Auswerteeinrichtung eine Auswahleinrichtung auf, die die Einstellung einer Endgeräte-Ausscheidungsziffer zuläßt. Die Auswerteeinrichtung sendet an die Ansteuerungseinrichtung in diesem Fall nur dann ein Aktivierungssignal, wenn der eingehende Anruf dem Endgerät mit der eingestellten Endgeräte-Ausscheidungsziffer gilt. Damit lassen sich beispielsweise in einem Hausnetz auf einfache Weise mehrere Signalvorrichtungen betreiben, die unterschiedlichen Endgeräten zugeordnet sind.

In einer weiteren vorteilhaften Ausgestaltung der Erfindung wird die Anruf-Signalisierungsvorrichtung über den Signalgeber mit Energie versorgt, so daß eine separate Energieversorgung für die Signalisierungsvorrichtung entfallen kann.

Weitere vorteilhafte Ausgestaltungen ergeben sich aus den ubrigen abhängigen Ansprüchen.

Die Erfindung wird nun anhand eines Ausführungsbeispiels mit Bezug auf die Zeichnungen näher erläutert. Dabei zeigen:
- Figur 1: eine schematische Darstellung eines ISDN-Netzes ausgehend vom Basisanschluß, und
- Figur 2: den Aufbau der erfindungsgemäßen Anruf-Signalisierungsvorrichtung in schematischer Darstellung

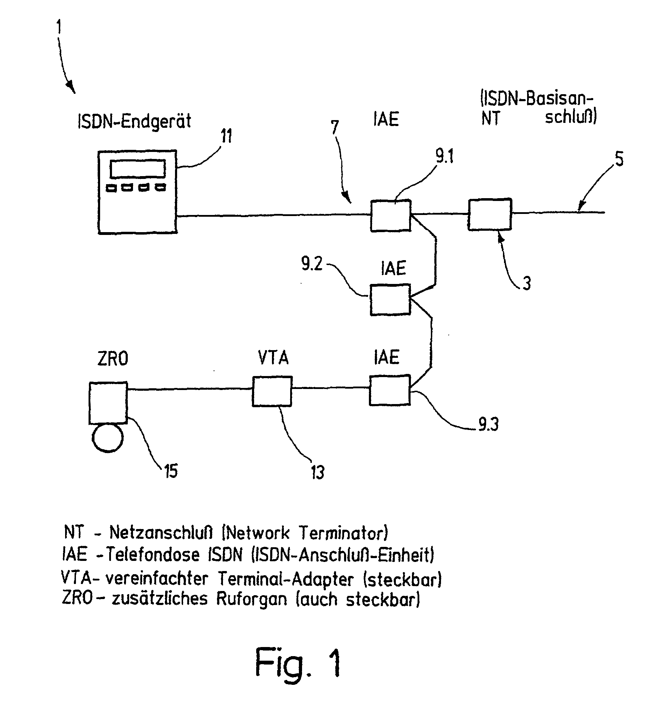

In Figur 1 ist beispielhaft eine Anschlußkonfiguration für einen ISDN-Basisanschluß dargestellt. Selbstverständlich ist die Erfindung auch bei sogenannten ISDN-Mehrgeräteanschlüssen einsetzbar und nicht auf das gezeigte Ausführungsbeispiel beschränkt.

Ein ISDN-Basisanschluß 1 weist einen Netzabschluß 3 auf, der als Schnittstelle zwischen dem öffentlichen Netz 5 und dem privaten Netz 7 dient. Der Netzabschluß 3 ist mit einer oder mehreren Telefon-Anschlußdosen 9, beispielsweise in unterschiedlichen Räumen verbunden. An eine solche Telefonanschlußdose ist ein ISDN-Endgerät 11, beispielsweise ein Telefon oder ein Telefax anschließbar. Entsprechend der jeweiligen Konfiguration des Basisanschlusses lassen sich beispeilsweise einzelne an den Telefon-Anschlußdosen 9 angeschlossene Endgeräte 11 über eine Endgeräte-Ausscheidungsziffer auswählen, die an die Telefonnummer anzuhängen und am entsprechenden Endgerät einzustellen ist. Bei einem Basisanschluß lassen sich auf diese Weise mehrere Endgeräte 11 unabhängig voneinander ansprechen.

Im vorliegenden Ausführungsbeispiel ist an die dritte Telefon-Anschlußdose 9.3 eine Anruf-Signalisierungsvorrichtung 13 angeschlossen, die ihrerseits mit einem Tonrufgerät 15, beispielsweise einem Zweitwecker verbunden ist. Diese Anruf-Signalisierungsvorrichtung 13 hat die Aufgabe, bei einem eingehenden Anruf das Tonrufgerat 15 zu aktivieren, unabhängig davon, welches der Endgeräte angesprochen ist, so daß ein Benutzer auch in einem Raum über einen eingehenden Anruf informierbar ist, in dem kein mit einer Klingel versehenes Telefon steht.

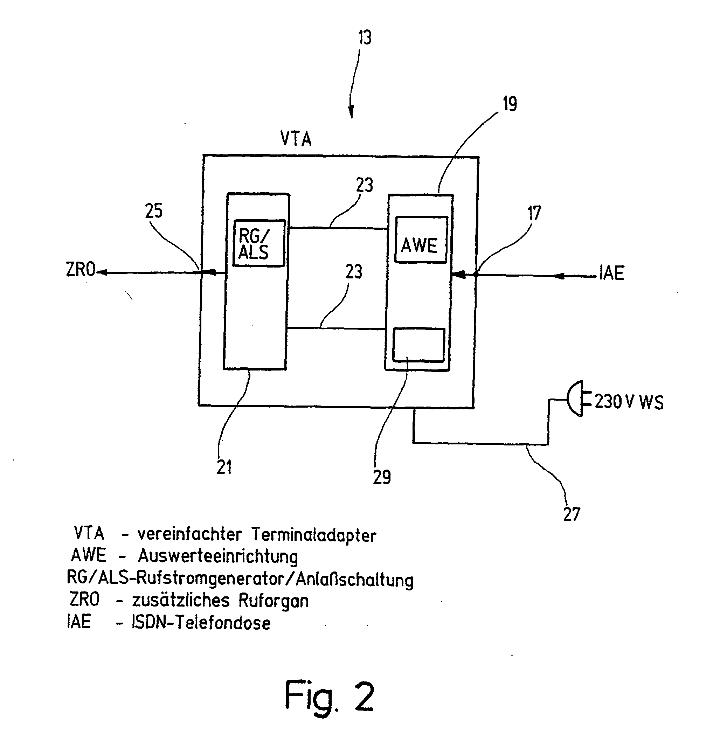

Der Aufbau einer solchen Anruf-Signalisierungsvorrichtung 13 ist schematisch in Figur 2 dargestellt. Sie weist einen Anschluß 17 auf, der mit der Telefon-Anschlußdose verbindbar ist. Mit dem Anschluß 17 ist eine Auswerteeinrichtung 19 elektrisch verbunden, die zur Auswertung der übertragenen ISDN-Daten ausgebildet ist. Dabei ist es lediglich erforderlich, die einen eingehenden Anruf betreffenden Informationen zu erkennen, so daß auf weitere komplizierte Schaltungselemente zur Auswertung weiterer Informationen verzichtet werden kann.

Die Auswerteeinrichtung 19 ist mit einer Ansteuerungseinrichtung 21 beispielhaft über zwei Leitungen 23 verbunden. Die Ansteuerungseinrichtung 21 dient dazu, ein an einem Ausgangsanschluß 25 angeschlossenes Tonrufgerät 15 zu aktivieren.

Aus Figur 2 ist noch ersichtlich, daß die Anruf-Signalisierungsvorrichtung 13 über eine Leitung 27 mit Energie versorgt wird.

Die Anruf-Signalisierungsvorrichtung 13 arbeitet nun wie folgt:

Zunächst ist die Signalisierungsvorrichtung 13 direkt an eine ISDN-Telefonanschlußdose anzuschließen. Bei einem eingehenden Anruf empfängt die Auswerteeinrichtung 19 das entsprechende ISDN-Protokoll, wertet aber nur die für den Ruf relevanten Signale aus. Die übrigen Teile des Protokolls finden keine Berücksichtigung und werden ignoriert. Bei vorliegen eines Rufsignals wird eine entsprechende Information über die Leitungen 23 an die Ansteuerungseinrichtung 21 übertragen. Je nach Ausgestaltung des Tonrufgerätes wird beispielsweise ein Rufstrom in der Ansteuerungseinrichtung 21 erzeugt und an das Tonrufgerät geführt. Hiermit lassen sich dann einfach aufgebaute Klingeln als Tonrufgeräte einsetzen. Des weiteren ist es möglich, die Ansteuerungseinrichtung 21 mit einem Schalter auszubilden, mittels dem das Tonrufgerät aktivierbar ist. In diesem Fall verfügt das Tonrufgerät über eine eigene Energieversorgung, die dann vorteilhafterweise auch für die Anruf-Signalisierungsvorrichtung 13 nutzbar ist. Die Leitungen 27 sind bei dieser Ausführungsform dann mit dem Tonrufgerät 15 verbunden.

Selbstverständlich sind auch andere Lösungen zur Aktivierung eines Tonrufgeräts möglich.

In einem weiteren Ausführungsbeispiel umfaßt die Auswerteeinrichtung 19 eine Auswahleinrichtung 29, die zur Einstellung einer Endgeräte-Ausscheidungsziffer dient. Mit Hilfe dieser Auswahleinrichtung 29 ist es möglich, die Ansteuerungseinrichtung 21 nur dann anzusteuern, wenn der eingehende Anruf das Endgerät mit der ausgewählten Ausscheidungsziffer betrifft. Damit ist eine Signalisierung eines Anrufs zu jedem am Basis-Anschluß angeschlossenen Endgerät selektiv möglich. Die Auswahleinrichtung 29 selbst läßt sich beispielsweise als DIP-Schalter ausbilden.

## Patentansprüche

1. Anruf-Signalisierungsvorrichtung zum Betrieb an einem ISDN-Anschluß, mit einem Anschluß für einen Signalgeber (15), **gekennzeichnet durch** eine direkt an den ISDN-Anschluß (9.3) anschließbare Auswerteeinrichtung (19), die lediglich eine in übertragenen ISDN-Daten enthaltene Rufinformation auswertet, und eine Ansteuerungseinrichtung (21), die von der Auswerteeinrichtung (19) angesteuert ist und einen an die Ansteuerungseinrichtung (21) angeschlossenen Signalgeber (15) aktiviert.

2. Anruf-Signalisierungsvorrichtung nach Anspruch 1, **dadurch gekennzeichnet, daß** der Signalgeber (15) als akustischer Wecker ausgebildet ist.

3. Anruf-Signalisierungsvorrichtung nach Anspruch 1 oder 2, **dadurch gekennzeichnet, daß** der Signalgeber (15) als analog betreibbarer Signalgeber ausgebildet ist.

4. Anruf-Signalisierungsvorrichtung nach einem der vorhergehenden Ansprüche, **dadurch gekennzeichnet, daß** die Auswerteeinrichtung eine Auswahleinrichtung (29) umfaßt, die eine selektive Ansteuerung der Ansteuerungseinrichtung (21) abhängig von dem angesprochenen Endgerät durchführt.

5. Anruf-Signalisierungsvorrichtung nach einem der vorhergehenden Ansprüche, **dadurch gekennzeichnet, daß** ihre Energieversorgung über den angeschlossenen Signalgeber erfolgt.

## Claims

1. A call signalling device for operating an Integrated-Services Digital Network (ISDN) connection, having a terminal for a signal generator (15), **characterized by** an evaluation means (19) directly connectable to the ISDN connection (9.3) which merely evaluates a ring information contained in the transmitted ISDN data, and a drive means (21) driven by the evaluation means (19) and activates a signal generator (15) connected to the drive means (21).

2. The call signalling device according to claim 1, **characterized in that** said signal generator (15) is configured as an acoustic alarm.

3. The call signalling device according to claim 1 or claim 2, **characterized in that** said signal generator (15) is configured as a signal generator suitable for analogue operation.

4. The call signalling device according to any one of the preceding claims, **characterized in that** said evaluating means comprises a selection means (29) which carries out a selective driving of said drive means (21) depending on the intended terminal equipment.

5. The call signalling device according to any one of the preceding claims, **characterized in that** the power supply thereof is carried out via the connected signal generator.

## Revendications

1. Dispositif de signalisation d'appel pour fonctionnement sur une connexion RNIS, avec une connexion pour un émetteur de signaux (15), **caractérisé par** un dispositif d'évaluation (19) directement connectable à la connexion RNIS (9.3), lequel évalue uniquement une information d'appel contenue dans des données RNIS transmises, et par un dispositif de commande (21), lequel est commandé par le dispositif d'évaluation (19) et active un émetteur de signaux (15) connecté au dispositif de commande (21).

2. Dispositif de signalisation d'appel selon la revendication 1, **caractérisé en ce que** l'émetteur de signaux (15) est configuré comme un avertisseur acoustique.

3. Dispositif de signalisation d'appel selon la revendication 1 ou 2, **caractérisé en ce que** l'émetteur de signaux (15) est configuré comme un émetteur de signaux exploitable analogiquement.

4. Dispositif de signalisation d'appel selon l'une des revendications précédentes, **caractérisé en ce que** le dispositif d'évaluation comprend un dispositif de sélection (29) qui exécute une commande sélective du dispositif de commande (21) en dépendance du terminal ciblé.

5. Dispositif de signalisation d'appel selon l'une des revendications précédentes, **caractérisé en ce que** son alimentation en énergie se fait par l'intermédiaire de l'émetteur de signaux connecté.
